# EUROPÄISCHE PATENTSCHRIFT

(11) **EP 2 197 810 B1**
(45) Veröffentlichungstag und Bekanntmachung des Hinweises auf die Patenterteilung: **26.01.2011**
(21) Anmeldenummer: 08836982.2
(22) Anmeldetag: 06.10.2008
(51) Int. Cl.: C04B 14/36, C04B 28/14

(54) **VERFAHREN ZUR HERSTELLUNG EINER BAUPLATTE AUF CALCIUMSULFAT-BARIUMSULFAT-BASIS**
METHOD FOR PRODUCING A BUILDING SLAB BASED ON CALCIUM SULFATE-BARIUM SULFATE
PROCÉDÉ POUR FABRIQUER UN PANNEAU DE CONSTRUCTION À BASE DE SULFATE DE CALCIUM-SULFATE DE BARYUM

(30) Priorität: 05.10.2007 EP 07117942; 07.12.2007 EP 07122579
(43) Veröffentlichungstag der Anmeldung: 23.06.2010
(73) Patentinhaber: Knauf Gips KG, 97349 Iphofen (DE)
(72) Erfinder: KRÄMER, Georg, 99734 Nordhausen (DE); SCHELLER, Lothar, 97346 Iphofen (DE); VOGEL, Petra, 97359 Schwarzach (DE); GREBNER, Gosbert, 97320 Albertshofen (DE); HUMMEL, Hans-Ulrich, 97346 Iphofen (DE)
(74) Vertreter: von Kreisler, Alek
(86) Internationale Anmeldenummer: PCT/EP2008/063331
(87) Internationale Veröffentlichungsnummer: WO 2009/047228

(56) Entgegenhaltungen:
- WO-A-2006/016200
- DE-A1- 3 607 190
- GB-A- 918 647
- US-A- 1 529 228

## Beschreibung

Die vorliegende Erfindung betrifft ein Verfahren zur Herstellung von Strahlenschutzplatten und hierdurch erhältliche Strahlenschutzplatten

Zum Schutz gegen Röntgenstrahlung werden im Medizinbereich, aber auch im Industriebereich, die Wände von Räumen, in denen beispielsweise Röntgengeräte stehen und betrieben werden, mit einer Verkleidung versehen, beispielsweise auf Basis einer Bleifolie, die als gesonderte Lage oder in Form von Verbundelementen mit Bleikaschierung eingesetzt werden. Die Verbundplatten lassen sich unkomfortabel verarbeiten, insbesondere die Plattenablängung ist unpraktisch und die Entsorgung von bleifolienhaltigen Plattenresten ist sehr aufwendig. Zudem sind entsprechende Platten schwer. Solche Platten werden zumeist als Sandwichplatten eingesetzt, bei denen die Bleifolie innen liegt, um Beschädigungen der Folie zu vermeiden.

Grundsätzlich kennt der Fachmann auch Gipsplatten ohne Bleifolie, die als Strahlenschutzplatten eingesetzt werden können. Die DE 36 07 190 beschreibt eine Gipsplatte und deren Verwendung als Strahlenschutzplatte, wobei Gips und Bariumsulfat oder Baryt, gegebenenfalls zusammen mit Bleioxid zur Herstellung verwendet werden. Hierzu wird beschrieben, dass Gips und Baryt in gleicher Körnung vermischt werden, insbesondere, dass Gips und Baryt gemeinsam gemahlen werden.

Während Gips eine Dichte im Bereich von etwa 2,6 bis 2,7 g/cm³ hat, hat Bariumsulfat eine Dichte von etwa 4,3 g/cm³. Dies macht das Vermischen der beiden Mineralien schwierig.

Bariumsulfat ist ein wesentlich härteres Mineral, so dass bei Verwendung des in der DE 36 07 190 beschriebenen Verfahrens der Gips immer feiner gemahlen wird, während sich die Korngröße des Bariumsulfates kaum verändert.

Feingemahlener Gips benötigt zur Herstellung des Gipsbreis besonders viel Wasser, was eine großtechnische Produktion schwierig macht, da auf einer üblichen Gipsplattenanlage der Gipsbrei in kurzer Zeit soweit abbinden muss, dass die Platte geschnitten werden kann und außerdem Zeit und Temperatur für die Trocknung begrenzt sind.

Großtechnisch konnte daher eine Platte nach dem Verfahren der DE 36 07 190 nicht hergestellt werden.

Aufgabe der Erfindung war es ein Verfahren bereitzustellen, mit dem entsprechende Platten ohne Verlust typischer Platteneigenschaften wie beispielsweise Biegezugfestigkeit, Feuerbeständigkeit, einfache Verarbeitbarkeit, vergleichbar zu Platten ohne Bariumsulfatzusatz, aber mit hoher Strahlenabsorption industriell gefertigt werden können.

Gelöst wird die Aufgabe durch ein Verfahren mit folgenden Schritten:
- Bereitstellen von pulverförmigem, abbindefähigem Stuckgips in einer Korngröße d50 zwischen 30 und 50 µm
- Bereitstellen von pulverförmigem Bariumsulfat mit einer Korngröße d50 zwischen 5 und 15 µm
- Vermischen des pulverförmigen Stuckgips und des pulverförmigen Bariumsulfats
- Vermischen der Pulvermischung mit Wasser,
- Formen einer Gipsplatte auf einer üblichen Gipsplattenproduktionsanlage.

Die übliche Gipsplattenproduktionsanlage wird kontinuierlich betrieben, wobei angerührte, abbindefähige Masse auf eine Plattenabdeckung aufgetragen wird, mit einer zweiten Abdeckung versehen wird, gefolgt vom Schneiden des Plattenstrangs und Trocknen der Platten.

Bariumsulfat ist ein Produkt, das durch eine Fällungsreaktion hergestellt wird und daher zum einen eine uneinheitliche und zum anderen eine geringe Korngröße aufweist. Versuche, einen Stuckgips mit ähnlicher Korngrößenverteilung einzusetzen, führten zu einem besonders hohen Wasserbedarf, um einen einheitlichen Gipsbrei zu erzeugen. Die entsprechenden Platten banden dann nicht hinreichend schnell auf den Bandstraßen ab und ergaben Probleme beim Schneiden. Darüber hinaus konnte die notwendige Trocknung nicht erreicht werden.

Erst durch die erfindungsgemäße Verwendung von Stuckgips größerer Korngröße konnten die Probleme überwunden werden. Auf diesem Wege konnte die Pulvermischung mit Wasser gemischt werden, dass ein Wasser-Feststoffverhältnis von 0,50 bis 0,60, bevorzugt 0,52 bis 0,54 erreicht werden konnte. Der entsprechende Gips/Bariumsulfatbrei zeigt ein hinreichend schnelles Abbindeverhalten um auf einer üblichen Gipsplattenproduktionsanlage geschnitten und anschließend getrocknet zu werden. Die Karton- oder Vlieshaftung war dabei sehr gut.

Der Anteil an Bariumsulfat in der Platte bestimmt die Strahlenschutzeigenschaften. Je mehr Bariumsulfat bezogen auf die Plattenfläche sich in der Platte befindet, desto besser ist die Strahlenschutzwirkung. Anderseits können bei zu hoher Zugabe an Bariumsulfat die Festigkeit und das Brandverhalten negativ beeinflusst werden. Zu bedenken ist, dass Bariumsulfat im Gegensatz zu Gips keine Bindemitteleigenschaften aufweist.

Gute Ergebnisse bezogen auf alle Eigenschaften konnten insbesondere erzielt werden, wenn das Verhältnis Stuckgips zu Bariumsulfat zwischen 50:50 und 30:70 liegt, wobei ein Anteil von 55 bis 65 Gew.-% Bariumsulfat bevorzugt wird. Ein Bariumsulfatgehalt von 62 bis 66 Gew.-% ist besonders bevorzugt. Die Gewichtsverhältnisse werden gemessen als CaSO₄ x ½ H₂O:BaSO₄.

Überraschenderweise wurde gefunden, dass die Platten ausgezeichnete Schalldämmeigenschaften bei Trockenbaukonstruktionen aufwiesen. Je höher der Gehalt an BASO₄, desto besser die Schalldämmung, allerdings verschlechtert sich bei zu hohem Anteil an Bariumsulfat die Festigkeit. Die Platten zeigen eine hohe Biegeweichheit; es wird vermutet, dass die Bariumsulfatkristalle nicht in die festigkeitserzeugende Kristallvernetzung des abgebundenen Gipses inkorporiert sind.

In einer Ausführungsform der Erfindung erfolgt eine Zugabe von Fasern, insbesondere Kurzglasfasern, um die Stabilität der Platten in Brandfällen zu erhöhen, wobei ein Anteil an Fasern zwischen 0,2 und 0,4 Gew.-% vom Gewicht Stuckgips plus Bariumsulfat ein optimales Ergebnis bringt. Solche Kurzglasfasern sind beispielsweise von der Firma Owens Corning unter der Typenbezeichnung Advantex erhältlich. Besonders geeignete Faserdurchmesser liegen bei 10 bis 20 µm, besonders geeignete Faserlängen bei 3 bis 20 mm.

Erfindungsgemäß hat sich gezeigt, dass es zu bevorzugen ist, wenn Stuckgips und Bariumsulfat erst kurz vor der Herstellung des Gipsbreis miteinander vermischt werden. Werden die beiden Pulver vorgemischt, kommt es durch die Dichteunterschiede zu einer Trennung aufgrund der Schwerkraft. Zusätzlich wirken sich die unterschiedliche Korngrößenverteilungen beim Mischen negativ aus.

Zu bedenken ist, dass die Herstellung einer Gipsplatte kontinuierlich erfolgt, d.h. es muss ein Weg gefunden werden, mit dem kontinuierlich Gipsbrei mit stabilem Gehalt an Bariumsulfat produziert werden kann.

In einer bevorzugten Form hat es sich als besonders geeignet erwiesen, den Stuckgips mittels einer Bandwaage zu dosieren und in Abhängigkeit vom Wägeergebnis für den Stuckgips, Bariumsulfat zuzuwägen. Alternativ kann auch erst Bariumsulfat vorgelegt werden und dann Stuckgips zudosiert werden.

Es ist selbstverständlich für die Funktionsweise der Platten erforderlich, dass das Bariumsulfat gleichmäßig, und homogen in denPlatten vorliegt.

In einer besonders bevorzugten Ausführungsform wird daher in einem weiteren Schritt, abhängig von der Bariumsulfatdosierung ein Farbpigment zudosiert, so dass aus dem Grad der Einfärbung auf die korrekte Konzentration und Verteilung von Bariumsulfat geschlossen werden kann.

Die Strahlenschutzplatte kann eine kartonummantelte Gipsplatte sein. Es kann sich jedoch auch um eine Gipsplatte handelt, bei der der Kern mit einem Vlies ummantelt ist.

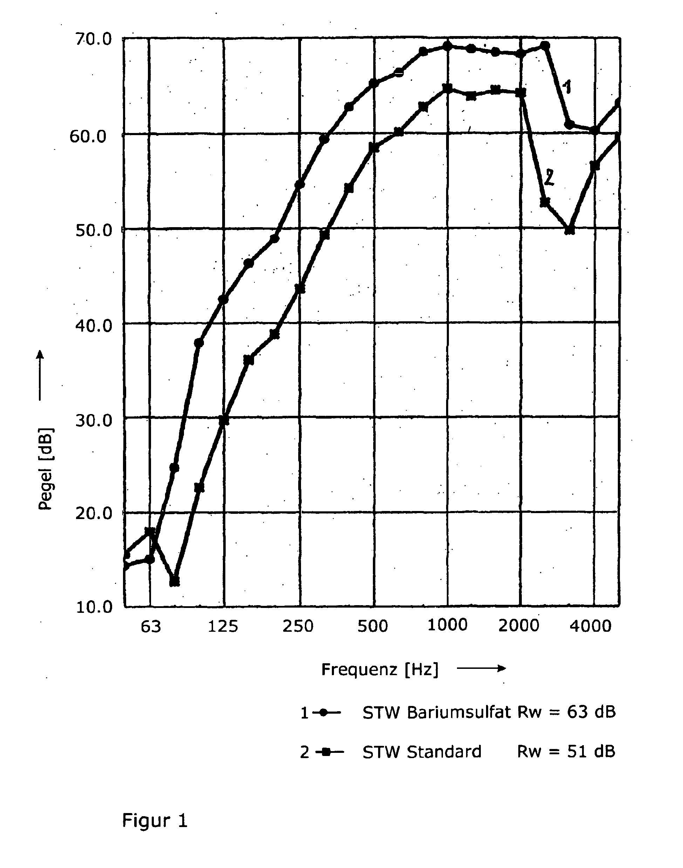

Figur 1 zeigt das Schalldämmungsmaß eines Ständerwerks mit der erfindungsgemäßen Platte.

Gegenstand der Erfindung ist weiterhin die durch das Verfahren erhältliche Platte und ihre Verwendung zur Schalldämmung.

Der Gegenstand der Erfindung ist auch ein Trockenbauwerk, das mindestens eine der erfindungsgemäßen Strahlenschutzplatten umfasst. Typischerweise enthält ein Trockenbauwerk mehrere Platten, wobei auch Strahlenschutzplatten und übliche Gipsplatten gemischt eingesetzt werden können.

Die Erfindung wird durch die folgenden Beispiele näher erläutert.

### Beispiel 1

Mit 12,5 mm dicken kartonummantelten Gipsplatten erfindungsgemäß hergestellt aus 40% Bindegips (CaSO₄ x ½ H₂O) und 60% Bariumsulfat (BaSO₄) wurde ein Bleigleichwert in Abhängigkeit von der Röhrenspannung der Röntgengeräte in folgender Größe erreicht:

| | | | |
|---|---|---|---|
| Röhrenspannung 80 KV | - | Bleigleichwert | 1 mm |
| Röhrenspannung 100 KV | - | Bleigleichwert | 0,5 mm |
| Röhrenspannung 150 KV | - | Bleigleichwert | 0,3 mm. |

Biegezug- und Schlagfestigkeit entsprachen denen der Platten mit 100% Bindegips. Die Platten waren nicht brennbar. Sie ließen sich schneiden und brechen wie normale kartonummantelte Gipsplatten. Die Plattenmasse betrug ca. 16,5 kg/m²

### Beispiel 2

Platten nach Beispiel 1, jedoch mit zusätzlich 0,3 Gew.-% Kurzglasfasern Owens Corning, Typ ADVANTEX erreichten eine hohe Stabilität und Gefügezusammenhalt im Brandfall. Der Faserdurchmesser liegt bei diesem Produkt bei 16 µm, die Faserlänge zwischen 4 und 16 mm. Mit vier Platten à 12,5 mm, Gesamtdicke 50 mm, konnten feuerbeständige Trennwände erstellt werden. Dieser Aufbau ergab einen Bleigleichwert bei

| | | | |
|---|---|---|---|
| Röhrenspannung 100 KV | - | Bleigleichwert | 1,9 mm |
| Röhrenspannung 150 KV | - | Bleigleichwert | 1,3 mm |

### Beispiel 3

Eine Platte nach Beispiel 2, jedoch mit einer Glasvliesummantelung brachte gegenüber der kartonummantelte Platte bei gleicher Strahlenabsorption eine noch bessere Stabilität im Brandfall. Außerdem wurde damit die Brennbarkeitsklasse A1 erreicht (nicht brennbar).

### Beispiel 4

Mit erfindungsgemäß hergestellten 12,5 mm dicken Gipsplatten aus 36% Gipsbindemittel, 64% Bariumsulfat und Kartonummantelung wurden an einer 100 mm dicken Ständerwand, bestehend aus CW-Blechständern mit einer Stegbreite von 50 mm, 40 mm Hohlraumfüllung aus Glaswolle und doppelter Beplankung / Seite mit der erfindungsgemäßen Platte ein Schalldämmwert Rw von 63 dB gemessen (Figur 1, Kurve 1). Eine vergleichsweise aufgebaute Wand mit Gipsplatten der Standardrezeptur erreichte dagegen nur ein Schalldämmmaß Rw von 51 dB (Figur 1, Kurve 2). Das bedeutet, dass durch die Wand mit den erfindungsgemäßen Platten die Lautstärke in dem geschützten Raum in der subjektiven Wahrnehmung ca. halb so groß ist im Vergleich zum Einsatz einer Wand mit Standardplatten.

Die gemessenen Kurven im Frequenzspektrum 50 - 5000 Hz, geprüft in einem nebenwegfreien Prüfstand, sind vergleichend in Figur 1 dargestellt.

## Patentansprüche

1. Verfahren zur Herstellung einer Strahlenschutzplatte auf Basis von Gips mit folgenden Schritten:
- Bereitstellen von pulverförmigem, abbindefähigem Stuckgips in einer Korngröße d50 zwischen 30 und 50 µm
- Bereitstellen von pulverförmigem Bariumsulfat mit einer Korngröße d50 zwischen 5 und 15 µm
- Vermischen des pulverförmigen Stuckgips und des pulverförmigen Bariumsulfats
- Vermischen der Pulvermischung mit Wasser, so dass ein Wasser-Feststoffverhältnis (w/w) von 0,50 bis 0,60 erreicht wird
- Formen einer Gipsplatte auf einer üblichen Gipsplattenproduktionsanlage.

2. Verfahren nach Anspruch 1, **dadurch gekennzeichnet, dass** das Gewichtsverhältnis zwischen Stuckgips und Bariumsulfat 50:50 bis 30:70 vorzugsweise 35:65 bis 45:55 beträgt.

3. Verfahren nach einem der Ansprüche 1 oder 2, **dadurch gekennzeichnet, dass** Stuckgips und Bariumsulfat getrennt bevorratet werden und der Herstellungsprozess der Gipsplatten kontinuierlich erfolgt.

4. Verfahren nach mindestens einem der Ansprüche 1 bis 3, **dadurch gekennzeichnet, dass** das Gewichtsverhältnis von Stuckgips und Bariumsulfat mittels einer Bandwaage eingestellt wird.

5. Verfahren nach mindestens einem der Ansprüche 1 bis 4, **dadurch gekennzeichnet, dass** das Gemisch zusätzlich einen Farbstoff enthält.

6. Verfahren nach einem der Ansprüche 1 bis 5, **dadurch gekennzeichnet, dass** zusätzlich Fasern, insbesondere Kurzglasfasern zugesetzt werden.

7. Strahlenschutzplatte erhältlich durch ein Verfahren nach mindestens einem der Ansprüche 1 bis 6.

8. Strahlenschutzplatte nach Anspruch 7 **dadurch gekennzeichnet, dass** das Gewichtsverhältnis zwischen Stuckgips und Bariumsulfat 35:65 bis 45:55 beträgt.

9. Trockenbauwerk mit mindestens einer Strahlenschutzplatten nach Anspruch 7 oder 8.

10. Verwendung einer Strahlenschutzplatte nach einem der Ansprüche 7 oder 8 oder des Trockenbauwerks nach Anspruch 9 zur Schalldämmung.

## Claims

1. A process for preparing a gypsum-based radiation protection board, comprising the following steps:
- providing powdery settable plaster of Paris having a grain size d50 of from 30 to 50 µm;
- providing powdery barium sulfate having a grain size d50 of from 5 to 15 µm;
- mixing the powdery plaster of Paris and the powdery barium sulfate;
- mixing the powder mixture with water to yield a water-to-solids ratio (w/w) of from 0.50 to 0.60;
- forming a gypsum board on a usual gypsum board production plant.

2. The process according to claim 1, **characterized in that** the weight ratio of plaster of Paris to barium sulfate is from 50:50 to 30:70, preferably from 35:65 to 45:55.

3. The process according to either of claims 1 or 2, **characterized in that** the plaster of Paris and barium sulfate are stored separately, and the preparation process of the gypsum boards is effected in a continuous mode.

4. The process according to at least one of claims 1 to 3, **characterized in that** the weight ratio of plaster of Paris to barium sulfate is adjusted by means of a belt weigher.

5. The process according to at least one of claims 1 to 4, **characterized in that** the mixture additionally contains a colorant.

6. The process according to at least one of claims 1 to 5, **characterized in that** fibers, especially chopped glass fibers, are additionally added.

7. A radiation protection board obtainable by a process according to at least one of claims 1 to 6.

8. The radiation protection board according to claim 7, **characterized in that** the weight ratio of plaster of Paris to barium sulfate is from 35:65 to 45:55.

9. A drywall construction comprising at least one radiation protection board according to claim 7 or 8.

10. Use of a radiation protection board according to claim 7 or 8 or of the drywall construction according to claim 9 for sound insulation.

## Revendications

1. Procédé de fabrication d'un panneau de radioprotection à base de plâtre comprenant les étapes suivantes consistant à :
- fournir un plâtre de moulage pulvérulent, apte à la prise présentant une granularité d50 comprise entre 30 et 50 µm
- fournir du sulfate de baryum pulvérulent présentant une granularité d50 comprise entre 5 et 15 µm
- mélanger le plâtre de moulage pulvérulent et le sulfate de baryum pulvérulent
- mélanger le mélange de poudres avec de l'eau, afin d'obtenir un rapport eau-matières solides (p/p) allant de 0,50 à 0,60
- former une plaque de plâtre sur une ligne de production de plaques de plâtre classique.

2. Procédé selon la revendication 1, **caractérisé en ce que** le rapport pondéral du plâtre de moulage au sulfate de baryum va de 50:50 à 30:70, de préférence de 35:65 à 45:55.

3. Procédé selon l'une quelconque des revendications 1 ou 2, **caractérisé en ce que** le plâtre de moulage et le sulfate de baryum sont stockés séparément et **en ce que** le procédé de fabrication des plaques de plâtre est réalisé en continu.

4. Procédé selon au moins l'une quelconque des revendications 1 à 3, **caractérisé en ce que** le rapport pondéral du plâtre de moulage au sulfate de baryum est ajusté au moyen d'un tapis peseur.

5. Procédé selon au moins l'une quelconque des revendications 1 à 4, **caractérisé en ce que** le mélange contient en plus un colorant.

6. Procédé selon l'une quelconque des revendications 1 à 5, **caractérisé en ce que** l'on ajoute en plus des fibres, en particulier des fibres courtes de verre.

7. Panneau de radioprotection pouvant être obtenu au moyen d'un procédé selon au moins l'une quelconque des revendications 1 à 6.

8. Panneau de radioprotection selon la revendication 7, **caractérisé en ce que** le rapport pondéral du plâtre de moulage au sulfate de baryum va de 35:65 à 45:55.

9. Ouvrage de construction sèche comprenant au moins un panneau de radioprotection selon la revendication 7 ou 8.

10. Utilisation pour l'isolation sonore d'un panneau de radioprotection selon l'une des revendications 7 ou 8 ou de l'ouvrage de construction sèche selon la revendication 9.
